# DEMANDE DE BREVET EUROPEEN

(11) **EP 0 633 234 A1**
(43) Date de publication de la demande: **11.01.1995**
(21) Numéro de dépôt: 93490014.3
(22) Date de dépôt: 08.07.1993
(51) Int. Cl.: C04B 41/50, C04B 35/66

(54) **Agent de protection contre l'oxydation des pièces réfractaires carbonnées, comprenant un mélange de composés boratés et de dérivés amines, ainsi qu'un procédé de fabrication des dites pièces refractaires carbonées**

(71) Demandeur: SOCIETE DES TERRES REFRACTAIRES DU BOULONNAIS, F-62152 Neufchatel-Hardelot (FR); BORAX FRANCAIS, Société Anonyme, F-78100 Saint Germain en Laye (FR)
(72) Inventeur: Vast, Pierre, F-59810 Lesquin (FR); Joly, Thierry, F-59480 La Basse (FR)
(74) Mandataire: Duthoit, Michel Georges André

(57) **Abrégé**

Application d'un produit boraté pour la protection contre l'oxydation et la corrosion de pièces réfractaires carbonées.

Selon le procédé de fabrication de pièces réfractaires carbonée de l'invention :
- on associe au dit matériau carboné réfractaire un agent de protection contre l'oxydation,
- on chauffe l'ensemble à une température d'au moins 450 °C.

L'invention a également pour objet un agent de protection contre l'oxydation pour la fabrication de pièces réfractaires carbonées et les dites pièces réfractaires carbonées obtenues par ce procédé de fabrication.

## Description

La présente invention a pour objet une application d'un produit, comprenant un mélange de composés boratés et de dérivés aminés, comme agent de protection contre l'oxydation de pièces réfractaires carbonées, ainsi qu'un procédé de fabrication des dites pièces réfractaires carbonées, un agent de protection contre l'oxydation pour la fabrication des dites pièces réfractaires carbonées et, les dites pièces carbonées fabriquées.

Elle trouvera son application dans tous les secteurs de l'activité économique dans lesquels on utilise des pièces ou des matériaux réfractaires carbonés qui contiennent du carbone en plus ou moins grande quantité et qui doivent être protégés notamment contre les phénomènes d'oxydation des composés carbonés des matériaux réfractaires dans lesquels ils sont constitués.

Dans de nombreux domaines industriels, mettant en oeuvre des températures élevées, on a recours à des dispositifs qui comportent des pièces et/ou des organes aptes à résister à des contraintes thermiques importantes.

C'est notamment le cas dans le domaine de la métallurgie, en raison des hautes températures nécessaires à la fusion des métaux, où de nombreux dispositifs utilisés comportent des organes et/ou des pièces, réalisées à base de matériaux réfractaires carbonés.

Il peut s'agir par exemple de goulottes réfractaires. Or, en pratique ces organes sont soumis à des phénomènes d'oxydation des composés carbonés des matériaux réfractaires, ce qui a pour conséquence de diminuer leurs propriétés de résistance thermique et de nuire au bon fonctionnement des installations.

Cela étant, le bore est un composé qui, en raison de ses propriétés physiques, chimiques et/ou physico-chimiques est utilisé, de nos jours, dans diverses applications industrielles.

C'est ainsi qu'il est connu comme fertilisant liquide des sols, des solutions boratées comprenant un composé polyboraté obtenu par réaction d'un acide borique avec au moins un amine choisi parmi un aminoalcool et un polyamine aliphatique.

Il est également connu, d'utiliser des solutions boratées comme agents d'imprégnation des fils textiles, agents réfrigérants, agents liquides de purification et/ou agent de désinfection.

La présente invention a pour but de proposer une application d'un produit, comprenant un mélange de composés boratés et de dérivés aminés, comme agents de protection contre l'oxydation de pièces réfractaires carbonées, ainsi qu'un procédé de fabrication des dites pièces réfractaires carbonées, un agent de protection contre l'oxydation utilisé pour la dite fabrication et les pièces obtenues par ce procédé de fabrication, qui assurent une protection efficace contre l'oxydation des matériaux ou pièces carbonés.

En effet, après vérification, on a constaté qu'une solution comprenant un mélange de composés boratés et de dérivés aminés, associés à un matériau réfractaire et chauffé, permettait d'obtenir une protection accrue contre l'oxydation et la corrosion du dit matériau réfractaire carboné.

Un avantage de la présente invention réside dans le fait que ce procédé de fabrication de pièces réfractaires carbonées est simple à mettre en oeuvre et, qu'en outre, l'agent de protection contre l'oxydation utilisé n'altère pas les propriétés des pièces à base de matériaux réfractaires carbonés dont il assure la protection.

Un autre avantage de la présente invention est qu'elle permet d'obtenir une protection accrue du matériau carboné en raison notamment du caractère de mouillabilité préférentielle du carbone par le mélange de composés boratés et d'amino-alcool de l'agent de protection contre l'oxydation.

Un autre but de la présente invention est de proposer un procédé de fabrication qui puisse être mis en oeuvre sur des sites industriels sans nécessiter des moyens importants ce qui en accroît ses capacités d'utilisation.

Un autre avantage de l'utilisation de l'agent de protection contre l'oxydation, conforme à l'invention, réside dans le fait qu'il permet d'accroître la durée de vie du matériau réfractaire carboné, ce qui en accroît les capacités d'utilisation tout en diminuant la pollution.

Un autre avantage de l'agent de protection contre l'oxydation conforme à l'invention pour la fabrication de pièces réfractaires carbonées est qu'il permet d'éviter l'adjonction de composés polluants, tels que par exemple des chromates, pour la fabrication de pièces réfractaires carbonées.

D'autres buts et avantages de la présente invention appraîtront au cours de la description qui va suivre qui n'est donnée qu'à titre indicatif et qui n'a pas pour but de la limiter.

A cet effet, l'invention a pour objet une application d'un produit, comprenant un mélange de composés boratés et de dérivés aminés, comme agents de protection contre l'oxydation de pièces réfractaires carbonées.

Selon l'invention, le procédé de fabrication de pièces réfractaires carbonées est caractérisé en ce que :
- on associe au dit matériau carboné réfractaire, un agent de protection contre l'oxydation,
- on chauffe l'ensemble à au moins une température de 450 °C.

Par ailleurs, un agent de protection contre l'oxydation de l'invention pour la fabrication de pièces réfractaires carbonées, est caractérisé en ce qu'il comprend, en poids :
- 30 à 80 % d'eau totale,
- 15 à 45 % d'un composé boraté,
- 5 à 20 % d'une base azotée,
la somme de ces trois composants étant égale à 100 %.

Enfin, l'invention concerne le produit réfractaire carboné obtenu par le dit procédé de fabrication.

L'invention sera bien comprise, à la lecture de la description suivante accompagnée de l'unique figure qui illustre, en coupe transversale, une rigole principale de coulée d'un réacteur métallurgique.

Le premier aspect de la présente invention vise une application d'un produit, comprenant un mélange de composés boratés, de dérivés aminés, comme agent de protection contre l'oxydation de pièces réfractaires carbonées.

En outre, elle vise également un procédé de fabrication des dites pièces réfractaires carbonées, un agent de protection contre l'oxydation utilisé pour la fabrication de ces dites pièces réfractaires carbonées et les dites pièces réfractaires carbonées obtenues.

Elle trouvera son application dans tous les secteurs de l'activité économique dans lequels il est nécessaire de protéger, des organes ou des pièces constitués à partir de matériaux réfractaires carbonés, contre l'oxydation de ces dits matériaux carbonés qui génère en outre une usure des pièces préjudiciables à leur bonne utilisation.

A cet effet, on peut citer, à titre d'exemple, comme application, l'utilisation de l'agent de protection contre l'oxydation conforme à l'invention,
- dans le processus de fabrication de pièces carbonées, telles que par exemple des pièces préfabriquées en béton ou pisés carbonés destinés à être employés à des températures élevées, d'au moins 450 °C,
- comme enduit de protection sur des garnissages réfractaires carbonés qui sont situés au contact ou non avec un métal liquide, ferreux ou non ferreux ou des laitiers,
- lors de la fabrication de matériaux réfractaires carbonés, par introduction dans la pâte réfractaire.

Pour cela, on met en oeuvre un procédé conforme à l'invention qui consiste à :
- associer aux dits matériaux carbonés réfractaires un agent de protection contre l'oxydation,
- chauffer l'ensemble à au moins une température de 450 °C.

Dans ce processus de fabrication, on utilise un agent de protection contre l'oxydation qui comprend :
- de 30 à 80 % en poids d'eau totale,
- de 15 à 45 % en poids d'un composé boraté,
- de 5 à 20 % en poids d'une base azotée
la somme de ces trois composants étant égale à 100 %.

Dans toute la description, on définit l'eau totale comme étant constituée notamment par l'eau d'addition pour la dilution et par les molécules d'eau associées aux composés boratés.

Le composé boraté sera de préférence de l'acide borique, en raison de ses propriétés physico-chimiques et, notamment de sa solubilité. A titre d'exemple, on utilisera une solution d'acide borique qui comprend 52 % en poids de B₂O₃.

Par ailleurs, les composés basiques utilisés seront choisis parmi les bases azotées organiques ou minérales et de préférence parmi les aminoalcools, les polyamines, et plus particulièrement l'éthanolamine.

L'introduction de ces composés boratés permet, après un traitement thermique, ou bien au cours de celui-ci, d'obtenir une bonne protection du carbone vis-à-vis de l'oxydation, ce qui assure un accroîssement de la durée de vie des pièces réfractaires carbonées.

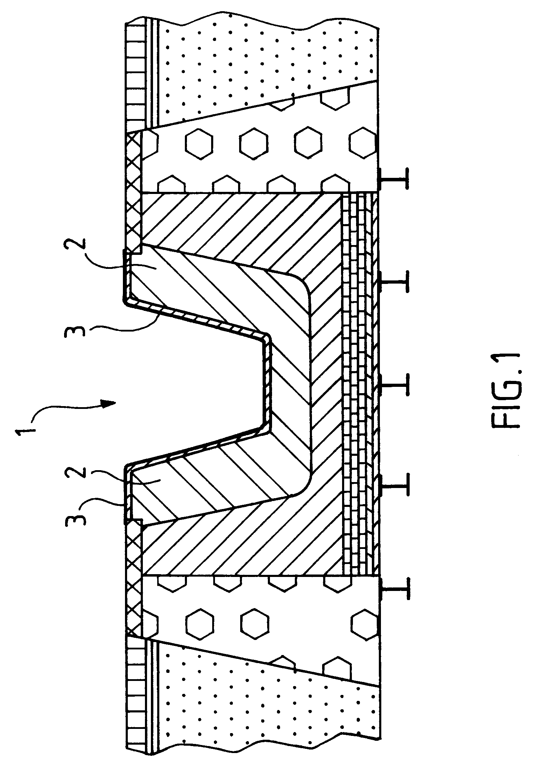

Cela étant, en se référant plus particulièrement à la figure 1, on voit, en coupe transversale, une rigole 1 principale de coulée d'un réacteur métallurgique tel qu'un haut fourneau. Cette rigole 1 permet en outre la décantation et la séparation de la fonte et du laitier surnageant.

Elle présente, une paroi interne 2 réalisée à partir d'un matériau réfractaire, tel qu'un béton réfractaire monolithique, qui au cours de l'utilisation, subit une oxydation de sa phase carbonée provoquant l'apparition de porosité. Ainsi, au cours de son utilisation, le laitier et/ou le métal pénètre à l'intérieur de celle-ci en provoquant une destruction progressive de cette paroi 2 de garnissage ce qui a pour conséquence de la rendre inutilisable.

Pour réduire une telle destruction du garnissage réfractaire carboné, selon la présente invention, on a recours à des techniques qui consistent soit à la mise en place d'un revêtement de protection, soit à l'introduction dans la pâte réfractaire d'un liquide de protection contre l'oxydation ou bien une combinaison de ces deux procédés.

A titre d'exemple, on pourra utiliser un béton réfractaire monolithique carboné ayant une composition chimique et des caractéristiques physico-chimiques déterminées et adaptées en fonction des applications et notamment un point de fusion supérieur à 1.000 °C. Ce béton réfractaire monolithique est, en outre, intimement mélangé à de l'eau et il est coulé, vibré dans la rigole 1 dans laquelle on le laisse se solidifier par prise hydraulique. Il peut s'agir par exemple d'un béton qui présente une composition, en poids, suivante :
- de 50 à 95 % de Al₂O₃,
- de 1 à 12 de SiO₂,
- de 0 à 40 % de SiC,
- de 1 à 12 % de carbone,
- des composants constitués par des adjuvants résiduels tels que la somme des composants est égale à 100 %.

En outre, on a obtenu de bons résultats en utilisant un béton qui présente une composition suivante :
- 79 % en poids de Al₂O₃,
- 4 % en poids de SiO₂,
- 11 % en poids de SiC,
- 4,5 % en poids de carbone,
- le reste des composants, pour arriver à 100%, étant constitué par des éléments et des adjuvants appropriés, la quantité d'eau nécessaire constituant un pourcentage pondéral de 3,5 à 7 %.

Selon l'invention, on met en place, un garnissage réfractaire carboné présentant une composition et des caractéristiques physico-chimiques déterminées et on le laisse durcir. Après durcissement de ce garnissage, on le recouvre d'un enduit liquide dans lequel un agent de protection contre l'oxydation conforme à l'invention a été incorporé, qui, après chauffage, va former une couche 3 d'un verre ou d'un émail qui bouche la porosité ouverte du garnissage réfractaire carboné en améliorant la résistance à la corrosion de celui-ci ainsi que sa tenue à l'oxydation.

Il est à noter que le recouvrement peut s'effectuer notamment par projection à la taloche ou au pinceau.

En outre, on utilise un agent de protection contre l'oxydation qui présente la composition, en poids, suivante :
- de 30 à 80 % d'eau totale,
- de 15 à 25 % d'un composé boraté exprimé en poids de B₂O₃,
- de 5 à 20 % d'une base azotée aqueuse,
la somme de ces trois composants étant égale à 100 %.

Il est à noter que l'on a plus particulièrement obtenu de bons résultats à partir d'un agent de protection contre l'oxydation qui présente la composition suivante :
- 17 % en poids d'eau d'addition,
- 62 % en poids d'acide borique,
- 21 % en poids de monoéthanolamine,
la somme des composants étant égale à 100 % en poids.

Afin d'accroître l'efficacité de cet agent de protection contre l'oxydation, celui-ci peut contenir des adjuvants sous forme de poudre, tels que des métaux et/ou des composés métalliques et/ou des oxydes du groupe II, III ou IV et/ou des carbures du groupe II, III ou IV.

En outre, on pourra par exemple, introduire dans la composition pondérale finale de l'agent de protection contre l'oxydation :
- de 10 à 100 % d'un agent de protection contre l'oxydation,
- de 0 à 90 % de SiC,
- de 0 à 90 % de TiC,
- de 0 à 90 % de MgO,
- de 0 à 90 % de ZrO₂,
- de 0 à 90 % de Al₂O₃,
- de 0 à 60 % d'aluminium en poudre,
- de 0 à 60 % de silicium en poudre,
la somme de ces composants étant égale à 100 %.

On a remarqué que l'on obtenait de bons résultats pour une composition qui comprend, en poids :
- de 80 à 100 % d'un agent de protection contre l'oxydation,
- de 0 à 20 % de SiC,
- de 0 à 20 % de TiC,
- de 0 à 20 % de MgO,
- de 0 à 20 % de ZrO₂,
- de 0 à 20 % de Al₂O₃,
- de 0 à 10 % d'Al en poudre,
- de 0 à 10 % de Si en poudre
la somme de ces composants étant égale à 100 %.

Il est à noter que le pourcentage pondéral de ces différents adjuvants est variable en fonction des applications et notamment il est tel que cet agent présente une viscosité pour qu'il puisse, en outre être facilement appliqué pour garnir la couche 2 de béton réfractaire par exemple par des moyens d'application tels que des pinceaux, des rouleaux, en spray ou autre.

Après chauffage, et notamment après être portée à une température comprise d'au moins 450 °C, cette couche 3 se vitrifie en constituant une couche de protection du dit béton réfractaire carboné et en améliorant sa tenue à l'oxydation.

Il est également possible, lors du garnissage de la rigole de coulée du haut fourneau 1, d'introduire, le béton à l'intérieur d'un dispositif de malaxage où il est intimement mélangé à l'eau de gâchage. Puis, on introduit également, dans ce dispositif de malaxage, un agent de protection contre l'oxydation sous forme liquide ou pâteuse conforme à l'invention, qui présente une composition similaire à celles qui ont été décrites précédemment.

A titre d'exemple, on a obtenu de bons résultats en introduisant de 0,5 à 10 litres de celui-ci par tonne de béton, ce qui correspond sensiblement à un pourcentage massique compris entre 0,007 à 1,5 %.

En outre, en raison de sa viscosité, cet agent de protection contre l'oxydation est complètement miscible dans l'eau à température ordinaire de sorte qu'il va pouvoir se mélanger intimement au dit béton réfractaire, ce qui permet de réduire la vitesse d'oxydation de cette phase carbonée lors de l'utilisation de la rigole de coulée du haut fourneau et ainsi, d'améliorer la tenue du béton réfractaire carbonée à l'usure provoquée par le métal liquide et le laitier.

Bien entendu, l'invention a également pour objet un produit réfractaire carboné obtenu par ce procédé de fabrication qui peut être utilisé dans tout autre domaine d'application dans lequel il est nécessaire de protéger des matériaux carbonés réfractaires contre l'oxydation auxquels ils sont soumis.

C'est ainsi que d'autres mises en oeuvre de la présente invention auraient pu être envisagées sans pour autant sortir du cadre de celle-ci.

## Revendications

1. Application d'un produit, comprenant un mélange de composés boratés et de dérivés aminés, comme agent de protection contre l'oxydation, de pièces réfractaires carbonées.

2. Procédé de fabrication de pièces réfractaires carbonées, caractérisé en ce que :
- on associe au dit matériau carboné réfractaire, un agent de protection contre l'oxydation,
- on chauffe l'ensemble à une température d'au moins 450 °C.

3. Procédé de fabrication selon la revendication 2, caractérisé en ce que l'on recouvre les pièces réfractaires carbonées avec un enduit liquide dans lequel l'agent de protection contre l'oxydation a été incorporé.

4. Procédé de fabrication selon la revendication 2, caractérisé en ce que l'on associe le dit agent de protection contre l'oxydation en le mélangeant en phase liquide pâteuse avec le matériau réfractaire.

5. Agent de protection contre l'oxydation pour la fabrication de produits réfractaires carbonés selon la revendication 2, caractérisé en ce qu'il comprend, en poids:
- 30 à 80 % d'eau totale,
- 15 à 45 % d'un composé boraté,
- 5 à 20 % de base azotée aqueuse,
la somme des trois composants étant égale à 100 %.

6. Agent de protection contre l'oxydation selon la revendication 5, caractérisé en ce qu'il comprend, en poids:
- 17 % d'eau d'addition,
- 62 % d'acide borique,
- 21 % de monoéthanol amine,
la somme des composants étant égale à 100 %.

7. Agent de protection contre l'oxydation selon la revendication 5, caractérisé en ce qu'il comprend un composé boraté qui se présente sous la forme d'acide borique.

8. Agent de protection contre l'oxydation selon la revendication 6, caractérisé en ce qu'il comprend des bases azotées minérales ou organiques.

9. Agent de protection contre l'oxydation selon la revendication 8, caractérisé en ce que les bases azotées organiques sont choisies parmi les aminoalcools, les polyamines.

10. Agent de protection contre l'oxydation selon la revendication 5, caractérisé en ce qu'il comporte des adjuvants sous forme de poudre, tels que des métaux et/ou des composés métalliques et/ou des oxydes du groupe II, III ou IV et/ou des carbures du groupe II, III, IV.

11. Agent de protection contre l'oxydation selon la revendication 10, caractérisé en ce qu'il comprend, en poids :
- 10 à 100 % d'un agent de protection selon la revendication 5,
- 0 à 90 % de SiC,
- 0 à 90 % de TiC,
- 0 à 90 % de MgO,
- 0 à 90 % de Zr0₂,
- 0 à 90 % de Al₂O₃
- 0 à 60 % d'aluminium Al,
- 0 à 60 % de silicium Si,
la somme des composants étant égale à 100 %.

12. Agent de protection contre l'oxydation selon la revendication 11, caractérisé en ce qu'il comprend, en poids :
- de 80 à 100 % d'un agent de protection contre l'oxydation selon la revendication 6,
- de 0 à 20 % de SiC,
- de 0 à 20 % de TiC,
- de 0 à 20 % de MgO,
- de 0 à 20 % de ZrO₂,
- de 0 à 20 % de Al₂O₃,
- 0 à 10 % d'Al en poudre,
- 0 à 10 % de Si en poudre.
la somme des composants est égale à 100 % en poids.

13. Produit réfractaire carboné obtenu par le procédé de fabrication selon l'une quelconque des revendications 2 à 4.
